# EUROPÄISCHE PATENTSCHRIFT

(11) **EP 2 156 654 B1**
(45) Veröffentlichungstag und Bekanntmachung des Hinweises auf die Patenterteilung: **19.12.2012**
(21) Anmeldenummer: 08749397.9
(22) Anmeldetag: 08.05.2008
(51) Int. Cl.: H04M 3/42

(54) **MOBILE TELEKOMMUNIKATIONSEINRICHTUNG ZUM ÜBERTRAGEN UND ÜBERSETZEN VON INFORMATIONEN**
MOBILE TELECOMMUNICATION DEVICE FOR TRANSMITTING AND TRANSLATING INFORMATION
DISPOSITIF DE TÉLÉCOMMUNICATION MOBILE PERMETTANT LA TRANSMISSION ET LA TRADUCTION D'INFORMATIONS

(30) Priorität: 10.05.2007 DE 102007021888; 03.03.2008 DE 202008003015 U
(43) Veröffentlichungstag der Anmeldung: 24.02.2010
(73) Patentinhaber: Baron, Norbert, 64331 Weiterstadt (DE)
(72) Erfinder: Baron, Norbert, 64331 Weiterstadt (DE)
(74) Vertreter: Bill, Burkart Hartmut
(86) Internationale Anmeldenummer: PCT/EP2008/003704
(87) Internationale Veröffentlichungsnummer: WO 2008/138544

(56) Entgegenhaltungen:
- WO-A-03/021796
- US-A1- 2006 125 914

## Beschreibung

Die Erfindung betrifft eine mobile Telekommunikationseinrichtung zum Übertragen und Übersetzen von Informationen.

Lange Zeit waren Gehörlose für eine Kommunikation mit Hörenden, die die Gebärdensprache nicht beherrschen auf die Hilfe eines anwesenden menschlichen Gebärdensprachdolmetschers angewiesen.

Hierzu beschreibt unter anderem die europäische Patentanmeldung EP 1 542 466 A1 (vgl. JP 2002269851) eine Telekommuniaktionseinrichtung, die in Verbindung mit einem Übersetzungsservice eine Kommunikation zwischen einem Gehörlosen und einem Hörenden, der die Gebärdensprache nicht beherrscht, ermöglicht. Dabei benutzt der Hörende einen Kopfhörer mit Mikrofon und der Gehörlose eine Videokamera und eine Anzeige, wobei alle Ein- und Ausgabegeräte mit einem Videotelefon, beispielsweise einem videofähigen Mobiltelefon, verbunden sind. Mittels des angerufenen Gebärdensprachdolmetschers des Übersetzungsservices werden die in das Mikrofon gesprochenen Worte des Hörenden in Gebärden für den Gehörlosen übersetzt und auf dessen Anzeige wiedergegeben. Umgekehrt werden die Gebärden des Gehörlosen von der Videokamera aufgenommen, übersetzt und als hörbare Worte auf dem Kopfhörer des Hörenden wiedergegeben. Damit der Gehörlose neben den auf der Anzeige wiedergegebenen Gebärden auch weiterhin seine Umgebung und seinen Kommunikationspartner betrachten kann, trägt er die Anzeige wie eine Brille vor den Augen. Ferner ist die Videokamera an der Taille des Gehörlosen angebracht, in ausreichendem Abstand um dessen Gebärden aufnehmen zu können.

Ein Nachteil der beschriebenen Lösung ist, dass sie lediglich für die Übersetzung einer Kommunikation zwischen einem Hörenden und einem Gehörlosen ausgebildet ist. Für die Übersetzung einer Kommunikation zwischen zwei Hörenden die keine gemeinsame Sprache beherrschen, bedarf es einer anderen Kommunikations-/Übersetzungseinrichtung.

Ein weiteres Konzept ist aus der Druckschrift WO 03/021796 bekannt.

Eine Aufgabe der Erfindung ist es daher, eine Kommunikations-/Übersetzungseinrichtung bereitzustellen, die auf einfache Weise eine Übersetzung sowohl einer Kommunikation zwischen einer gehörlosen und einer hörenden Person, die keine Gebärdensprache beherrscht, als auch einer Kommunikation zwischen zwei hörenden Personen, die aber keine gemeinsame Sprache beherrschen, ermöglicht.

Weitere Aufgaben bestehen darin, dass eine solche Kommunikations-/Übersetzungseinrichtung auch die Übersetzung einer Kommunikation zwischen zwei gehörlosen Personen, die aber keine gemeinsame Gebärdensprache beherrschen, ermöglicht, dass sie ferner einer gehörlosen Person visuell wahrnehmbare Informationen über deren akustisch wahrnehmbare Umwelt liefern kann und dass sie darüber hinaus auch einer blinden Person akustisch wahrnehmbare Informationen über deren visuell wahrnehmbare Umwelt liefern kann.

Eine zusätzliche Aufgabe besteht ferner hinsichtlich der Kommunikation zwischen zwei Personen, von denen zumindest eine gehörlos ist, nämlich darin, die wenigstens eine erforderliche Bildeingabeeinheit derart zu positionieren, dass auf einfache und bequeme Weise eine verbesserte Erfassung der Gebärden der gehörlosen Person möglich ist.

Die erstgenannte Aufgabe wird durch eine mobile Telekommunikationseinrichtung gemäß dem Anspruch 1 gelöst.

Demnach ist eine mobile Telekommunikationseinrichtung zum Übertragen und Übersetzen von Informationen vorgesehen, die wenigstens einen Telekommunikationskanal, umfassend einen Sende- und einen Empfangskanal, zum Übertragen von Informationen zu und von einer anderen Telekommunikationseinrichtung umfasst. Daneben umfasst die mobile Telekommunikationseinrichtung gemäß Anspruch 1 einen ersten Eingangsanschaltkanal, nachfolgend EK1 genannt, zum Anschalten einer ersten Spracheingabeeinheit und einen ersten Ausgangsanschaltkanal, nachfolgend AK1 genannt, zum Anschalten einer ersten Sprachausgabeeinheit, sowie einen zweiten Eingangsanschaltkanal, nachfolgend EK2 genannt, zum Anschalten einer zweiten Spracheingabeeinheit und einen zweiten Ausgangsanschaltkanal, nachfolgend AK2 genannt, zum Anschalten einer zweiten Sprachausgabeeinheit. Ferner umfasst die mobile Telekommunikationseinrichtung gemäß Anspruch 1 wenigstens einen dritten Eingangsanschaltkanal, nachfolgend EK3 genant, zum Anschalten einer Bildeingabeeinheit und wenigstens einen dritten Ausgangsanschaltkanal, nachfolgend AK3 genannt, zum Anschalten einer Bildausgabeeinheit. Darüber hinaus umfasst die mobile Telekommunikationseinrichtung gemäß Anspruch 1 wenigstens eine angeschaltete Sprach- oder Bildeingabeeinheit und wenigstens eine angeschaltete Sprach- oder Bildausgabeeinheit und des Weiteren eine Koppeleinheit zum selektiven Koppeln des Empfangskanals und/oder des EK1, EK2 und/oder EK3 mit dem Sendekanal und/oder dem AK1, AK2 und/oder AK3 unter Zwischenschaltung eines von der mobilen Telekommunikationseinheit aktivierbaren Übersetzungssystems, sowie eine Schalteinheit, mittels der die Koppeleinheit schaltbar ist.

Die Erfindung stellt somit eine mobile Telekommunikationseinrichtung, nachfolgend auch als Erstklassiger bzw. Hochwertiger Mobiler Sprachübersetzer oder englisch als Premium Mobile Language Translator (PMLT) bezeichnet, zur Verfügung, die sowohl von einer hörenden als auch einer gehörlosen Person jederzeit zur Übersetzung zwischen den verschiedensten Laut- und/oder Gebärdensprachen, sozusagen als persönlicher mobiler Sprachübersetzer, benutzt werden kann. Das gesamte Kommunikationskonzept, zu dem vor allem der PMLT gehört, wird auch als Globale Mobile Kommunikation besonderer Art oder englisch als Global Mobile Communication Premium (GMCP) bezeichnet.

Vorteilhafte und/oder bevorzugte Ausführungsformen und Weiterbildungen, mit denen unter anderem die weiteren Aufgaben gelöst werden, sind Gegenstand der abhängigen Ansprüche.

So ist der Telekommunikationskanal der mobilen Telekommunikationseinrichtung bevorzugt vollduplex- und echtzeitfähig.

Zweckmäßer Weise können eine an einen Eingangsanschaltkanal (EK1, EK2, EK3) der mobilen Telekommunikationseinrichtung angeschaltete Sprach- und/oder Bildeingabeeinheit und eine an einen Ausgangsanschaltkanal (AK1, AK2, AK3) der mobilen Telekommunikationseinrichtung angeschaltete Sprach - und/oder Bildausgabeeinheit als interne Einheit in die mobile Telekommunikationseinrichtung integriert sein oder als externe Einheit mit der mobilen Telekommunikationseinrichtung kabelbasiert oder kabellos verbunden sein.

Dabei ist bevorzugt vorgesehen, dass die externe Sprachausgabeeinheit ein Kopfhörer ist und/oder die externe Spracheingabeeinheit ein tragbares Mikrofon ist, wobei besonders bevorzugt vorgesehen ist, dass die externe Sprachausgabeeinheit und die externe Spracheingabeeinheit mechanisch miteinander verbunden sind und eine gemeinsame Einheit bilden, die nachfolgend auch als Sprechgarnitur oder Headset bezeichnet wird.

Des Weiteren ist dabei bevorzugt vorgesehen, dass die externe Bildeingabeeinheit eine tragbare Videokamera ist und/oder die externe Bildausgabeeinheit eine tragbare Anzeigeeinheit ist, die wie eine Brille vor einem oder beiden Augen eines Benutzers angebracht ist, wobei in besonders bevorzugter Weise die externe Bildeingabeeinheit und die externe Sprachausgabeeinheit und/oder die externe Spracheingeabeeinheit mechanisch miteinander verbunden sind und eine gemeinsame Einheit bilden, die nachfolgend auch als Komfort-Headset bezeichnet wird.

Um eine Kommunikation zwischen zwei Benutzern, von denen der eine in einer visuell wahrnehmbaren Sprache (Gebärdensprache) kommuniziert und der andere in einer akustisch wahrnehmbaren Sprache (Lautsprache) kommuniziert, zu ermöglichen, ist die Koppeleinheit der mobilen Telekommunikationseinrichtung zweckmäßiger Weise dazu ausgebildet, unter Zwischenschalten des Übersetzungssystems, den EK1, an den eine Spracheingabeeinheit angeschaltet ist, mit dem AK3, an den eine Bildausgabeeinheit angeschaltet ist, und den EK3, an den eine Bildeingabeeinrichtung angeschaltet ist, mit dem AK1, an den eine Sprachausgabeeinheit angeschaltet ist, zu koppeln.

Dabei ist bevorzugt vorgesehen, dass die angeschaltete Bildeingabeeinheit eine externe, tragbare Videokamera ist, die von dem in einer akustisch wahrnehmbaren Sprache kommunizierenden Benutzer getragen wird, und dass die Bildeingabeeinheit auf dessen Kommunikationspartner, den in einer visuell wahrnehmbaren Sprache kommunizierenden Benutzer, gerichtet ist.

Um zwischen zwei solchen Kommunikationspartnern ferner eine Telekommunikation zu ermöglichen, wobei eine zweite Telekommunikationseinrichtung erforderlich ist, ist die Koppeleinheit der mobilen Telekommunikationseinrichtung zweckmäßiger Weise dazu ausgebildet, unter Zwischenschalten des Übersetzungssystems anstelle des EK1, den Empfangskanal mit dem AK3 zu koppeln und den EK3 mit dem Sendekanal anstelle des AK1 zu koppeln.

Damit ferner eine Kommunikation zwischen zwei Benutzern möglich ist, die keine gemeinsame akustisch wahrnehmbare Sprache (Lautsprache) beherrschen, ist die Koppeleinheit der mobilen Telekommunikationseinrichtung zweckmäßiger Weise dazu ausgebildet, unter Zwischenschalten des Übersetzungssystem, den EK1, an den eine Spracheingabeeinheit angeschaltet ist, mit dem AK2, an den eine Sprachausgabeeinheit angeschaltet ist, und den EK2, an den eine Spracheingabeeinrichtung angeschaltet ist, mit dem AK1, an den ebenfalls eine Sprachausgabeeinheit angeschaltet ist, zu koppeln.

Um zwischen zwei solchen Kommunikationspartnern ferner eine Telekommunikation zu ermöglichen, wobei eine zweite Telekommunikationseinrichtung erforderlich ist, ist die Koppeleinheit der mobilen Telekommunikationseinrichtung zweckmäßiger Weise dazu ausgebildet, unter Zwischenschalten des Übersetzungssystems den EK1 mit dem Sendekanal anstelle des AK2 zu koppeln, und anstelle des EK2 den Empfangskanal mit dem AK1 zu koppeln.

Ferner ist die Koppeleinheit der mobilen Telekommunikationseinrichtung bevorzugt dazu ausgebildet, unter Zwischenschalten des Übersetzungssystem, den EK1, an den eine Spracheingabeeinheit angeschaltet ist, mit dem AK3, an den eine Bildausgabeeinheit angeschaltet ist, derart zu koppeln, dass ein Benutzer, der Informationen nur visuell wahrnehmen kann, Informationen über seine akustisch wahrnehmbare Umwelt in einer visuell wahrnehmbaren Sprache erhält.

Daneben ist die Koppeleinheit der mobilen Telekommunikationseinrichtung bevorzugt dazu ausgebildet, unter Zwischenschalten des Übersetzungssystems, den EK3, an den eine Bildeingabeeinrichtung angeschaltet ist, mit dem AK1, an den eine Sprachausgabeeinheit angeschaltet ist, zu koppeln und zwar derart, dass ein Benutzer, der Informationen nur akustisch wahrnehmen kann, Informationen über seine visuell wahrnehmbare Umwelt in einer akustisch wahrnehmbaren Sprache erhält.

Vorteilhafter Weise ist die Koppeleinheit der mobilen Telekommunikationseinrichtung ferner dazu ausgebildet, unter Zwischenschalten des Übersetzungssystem sowie unter Auswerten von Steuerinformationen, die zusammen mit den während einer Kommunikation zu übertragenden Informationen übertragen werden, selektiv den Empfangskanals und/oder den EK1, EK2 und/oder EK3 mit dem Sendekanal und/oder dem AK, AK2 und/oder AK3 zu koppeln.

Das Übersetzungssystem der mobilen Telekommunikationseinrichtung ist vorteilhafter Weise dazu ausgebildet, eine Information aus einer akustisch wahrnehmbaren Sprache simultan zu übersetzen in eine visuell wahrnehmbare Sprache und/oder in eine andere akustisch wahrnehmbare Sprache sowie ferner eine Information aus einer visuell wahrnehmbaren Sprache simultan zu übersetzen in eine akustisch wahrnehmbare Sprache und/oder eine andere visuell wahrnehmbare Sprache.

In besonders vorteilhafter Weise ist das Übersetzungssystem der mobilen Telekommunikationseinrichtung ferner dazu ausgebildet, eine akustisch wahrnehmbare Information simultan zu übersetzen in eine visuell wahrnehmbare Information und eine visuell wahrnehmbare Information simultan zu übersetzen in eine akustisch wahrnehmbare Information.

Entsprechend einer vorteilhaften Implementierung der mobilen Telekommunikationseinrichtung ist das Übersetzungssystem über den Telekommunikationskanal mit der mobilen Telekommunikationseinrichtung verbindbar.

Bevorzugt umfasst dabei das Übersetzungssystem eine zweite Telekommunikationseinrichtung zumindest nach Anspruch 1, die als mobile oder aber als stationäre Telekommunikationseinrichtung ausgebildet ist, wobei mittels dieser zweiten mobilen oder stationären Telekommunikationeinrichtung ein menschlicher Simultan-Dolmetscher die jeweilige Übersetzung bereitstellt.

Bei einer anderen vorteilhaften Implementierung der mobilen Telekommunikationseinrichtung ist das Übersetzungssystem in die mobile Telekommunikationseinrichtung integriert.

Diese und weitere Merkmale sowie weitere damit einher gehende Vorteile der Erfindung ergeben sich aus der nachfolgenden näheren Beschreibung bevorzugter Ausführungsbeispiele unter Bezugnahme auf die beigefügten Zeichnungen.

In den Zeichnungen zeigen:

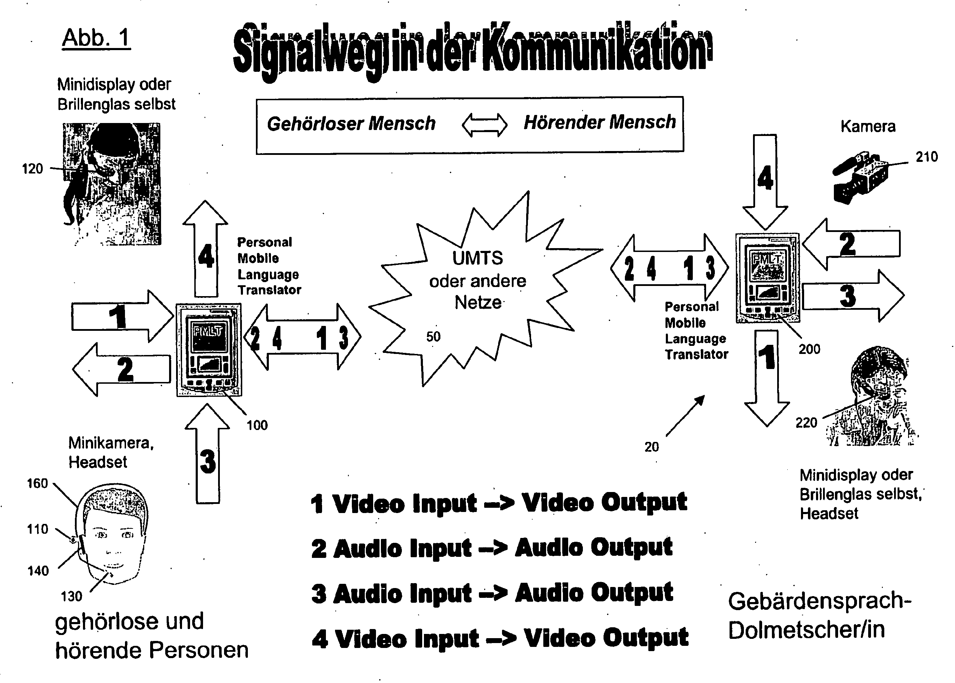

- Abb. 1: eine beispielhafte vereinfachte Darstellung des Signalwegs der Kommunikation zwischen einer gehörlosen, in Gebärdensprache kommunizierenden Person und einer hörenden, in Lautsprache kommunizierenden Person bei einer Übersetzung mittels der erfindungsgemäßen mobilen Telekommunikationseinrichtung;

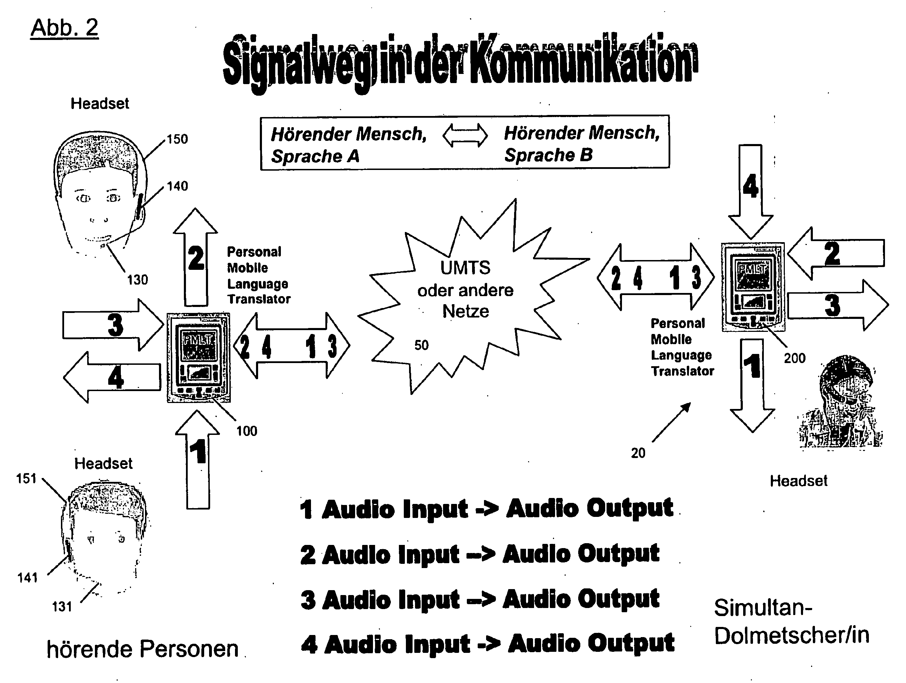

- Abb. 2: eine beispielhafte vereinfachte Darstellung des Signalwegs der Kommunikation zwischen zwei hörenden Personen, die aber keine gemeinsame Sprache beherrschen, bei einer Übersetzung mittels der erfindungsgemäßen mobilen Telekommunikationseinrichtung;

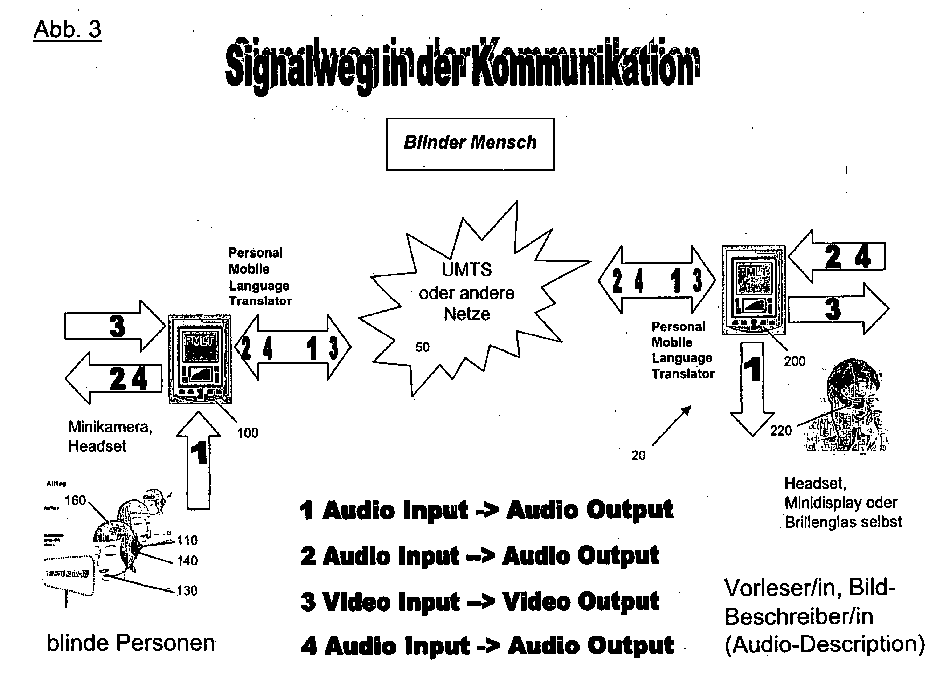

- Abb. 3: eine beispielhafte vereinfachte Darstellung des Signalwegs der Kommunikation, bei welcher eine blinde aber hörende Person mittels der erfindungsgemäßen mobilen Telekommunikationseinrichtung Informationen über ihre visuell wahrnehmbare Umwelt in einer akustisch wahrnehmbaren Sprache erhält;

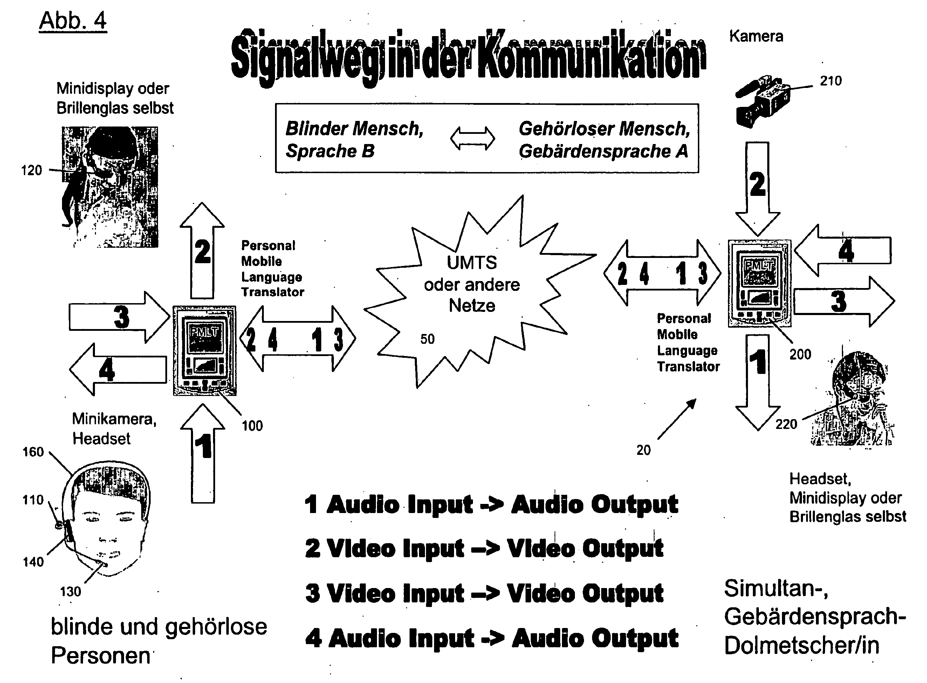

- Abb. 4: eine beispielhafte vereinfachte Darstellung des Signalwegs der Kommunikation zwischen einer gehörlosen, in Gebärdensprache kommunizierenden Person und einer blinden aber hörenden, in Lautsprache kommunizierenden Person bei einer Übersetzung mittels der erfindungsgemäßen mobilen Telekommunikationseinrichtung;

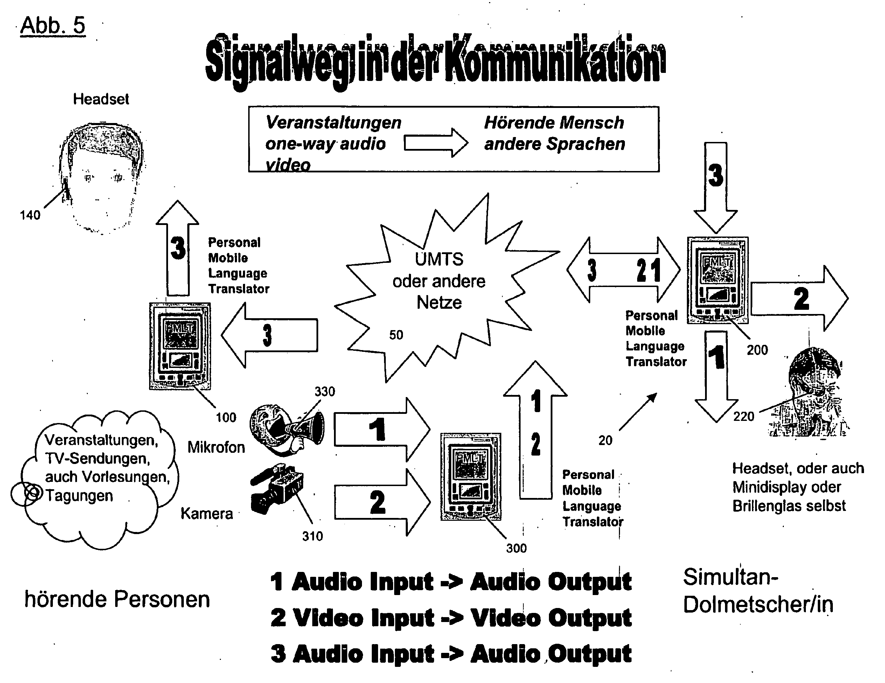

- Abb. 5: eine beispielhafte vereinfachte Darstellung des Signalwegs der Kommunikation, bei welcher eine hörende Person mittels der erfindungsgemäßen mobilen Telekommunikationseinrichtung eine Übersetzung der fremdsprachigen akustisch und/oder visuell wahrnehmbaren Informationen aus ihrer Umwelt in eine von ihr beherrschte, akustisch wahrnehmbare Sprache erhält;

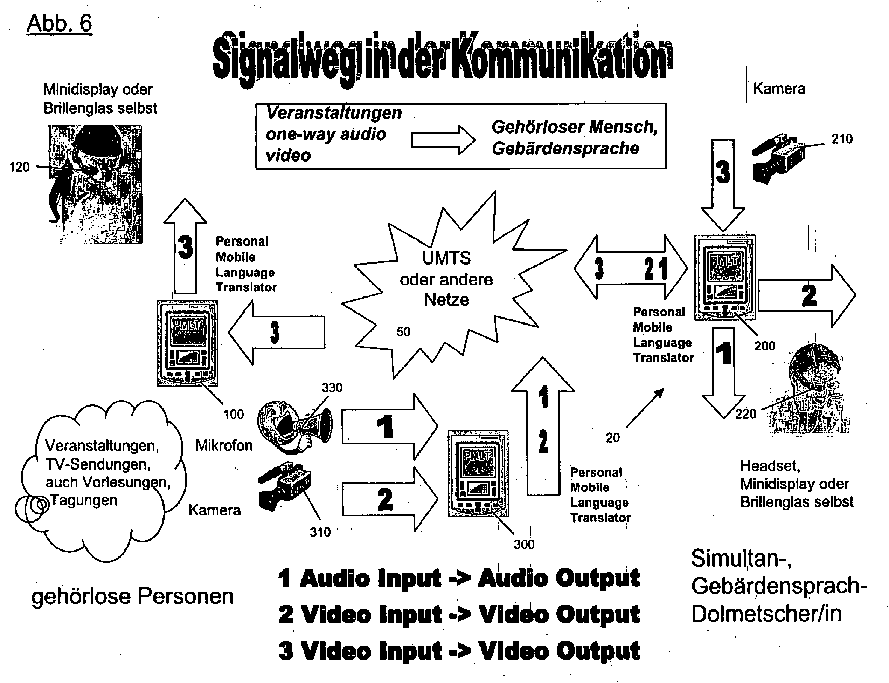

- Abb. 6: eine beispielhafte vereinfachte Darstellung des Signalwegs der Kommunikation, bei welcher eine gehörlose Person mittels der erfindungsgemäßen mobilen Telekommunikationseinrichtung eine Übersetzung der akustisch und/oder visuell wahrnehmbaren Informationen aus ihrer Umwelt in eine von ihr beherrschte, visuell wahrnehmbare Sprache erhält;

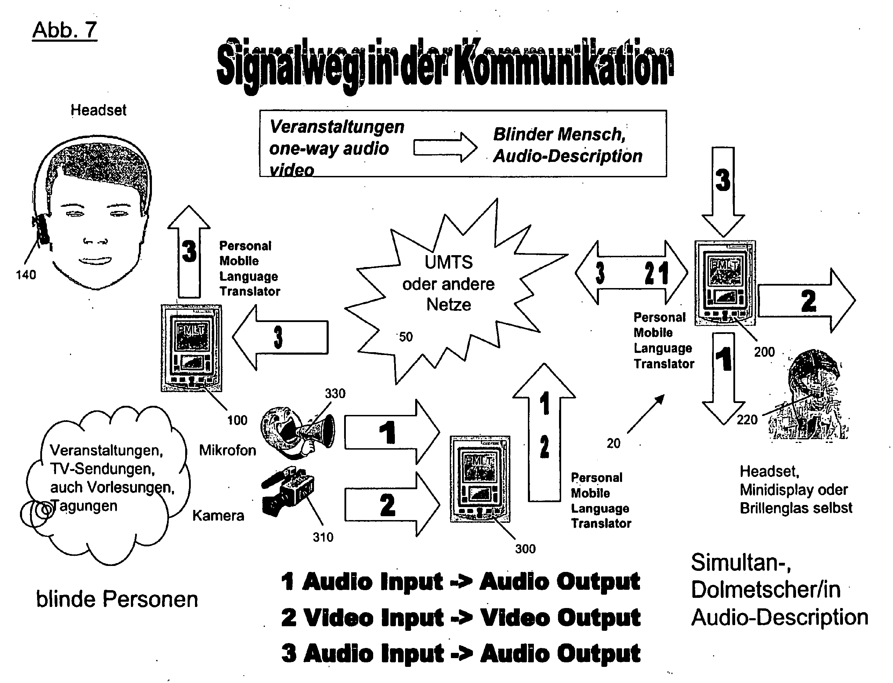

- Abb. 7: eine beispielhafte vereinfachte Darstellung des Signalwegs der Kommunikation, bei welcher eine blinde aber hörende Person mittels der erfindungsgemäßen mobilen Telekommunikationseinrichtung eine Übersetzung der akustisch und/oder visuell wahrnehmbaren Informationen aus ihrer Umwelt in eine von ihr beherrschte, akustisch wahrnehmbare Sprache erhält;

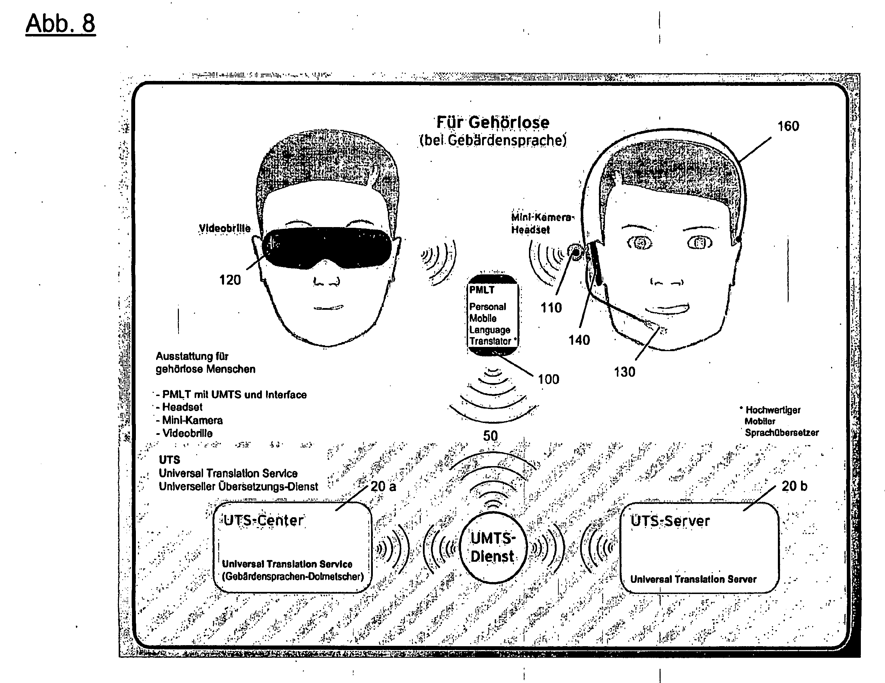

- Abb. 8: eine beispielhafte schematische Darstellung der Ausstattung für eine gehörlose und eine hörende Person, die mittels der erfindungsgemäßen mobilen Telekommunikationseinrichtung miteinander kommunizieren;

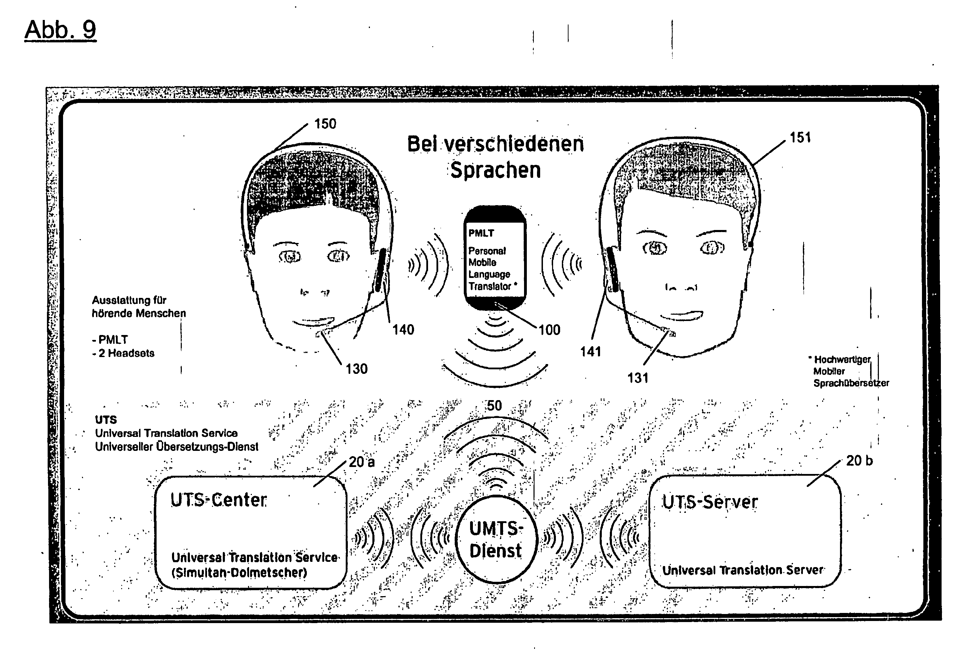

- Abb. 9: eine beispielhafte schematische Darstellung der Ausstattung für zwei hörende Personen, die keine gemeinsame Sprache beherrschen und mittels der erfindungsgemäßen mobilen Telekommunikationseinrichtung miteinander kommunizieren;

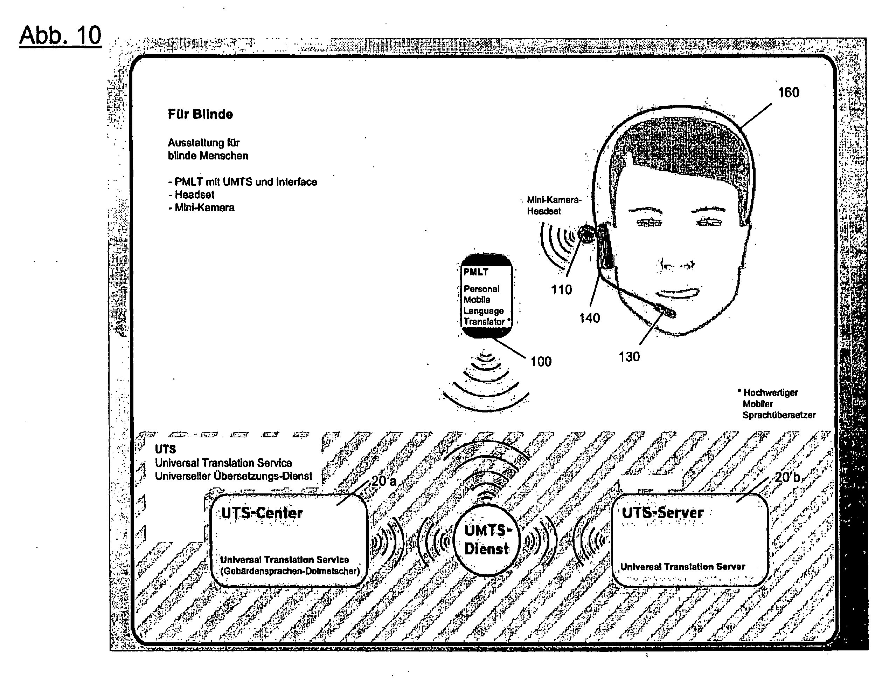

- Abb. 10: eine beispielhafte schematische Darstellung der Ausstattung für eine blinde Person, die mittels der erfindungsgemäßen mobilen Telekommunikationseinrichtung Informationen über ihre visuell wahrnehmbare Umwelt in einer akustisch wahrnehmbaren Sprache erhält;

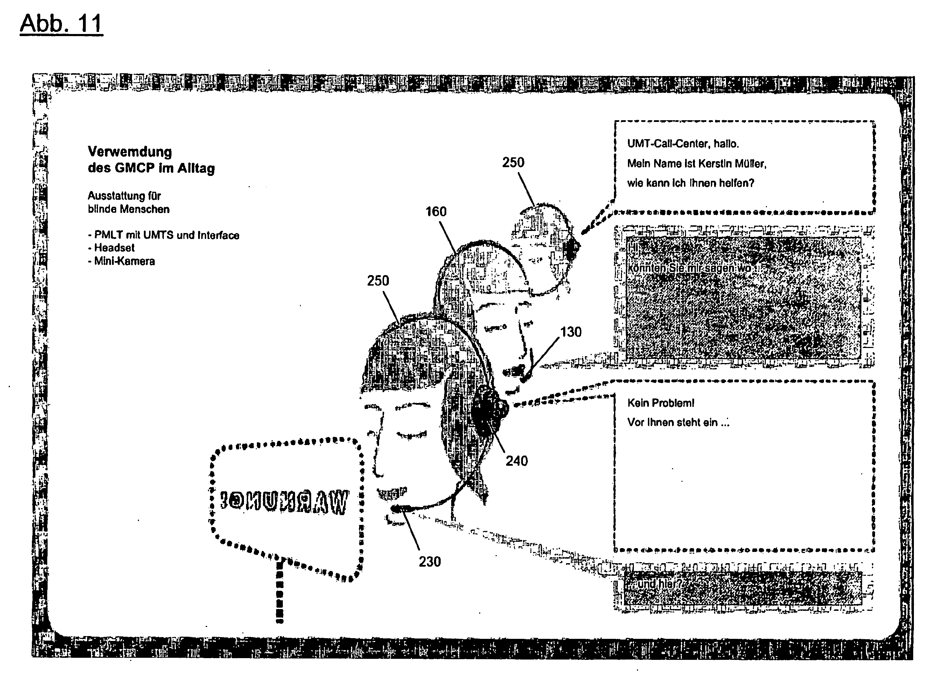

- Abb. 11: eine beispielhafte schematische Darstellung der Kommunikation, bei welcher eine blinde aber hörende Person mittels der erfindungsgemäßen mobilen Telekommunikationseinrichtung Informationen über ihre visuell wahrnehmbare Umwelt in einer akustisch wahrnehmbaren Sprache erhält.

Abb. 1 zeigt beispielhaft den Signalweg der Kommunikation zwischen einer gehörlosen, in Gebärdensprache kommunizierenden Person und einer hörenden, in Lautsprache kommunizierenden Person bei einer Übersetzung mittels des erfindungsgemäßen PMLT 100.

Die hörende Person trägt bei dieser Kommunikation ein Komfort-Headset 160, bei dem es sich um eine Kombination aus einem Köpfhörer als externe Sprachausgabeeinheit 140, einem tragbaren Mikrofon als externe Spracheingabeeinheit 130 und einer tragbaren Videokamera als externe Bildeingabeeinheit 110 handelt. Die gehörlose Person trägt lediglich eine Videobrille oder ein Minidisplay als externe Bildausgabeeinheit 120.

Alle Ein- und Ausgabeeinheiten werden mittels Kabel oder mittels geeigneter Funkübertragungstechniken, wie beispielsweise Bluetooth, kabellos an die entsprechenden Eingangs- und Ausgangsanschaltkanäle des PMLT 100 angeschaltet. Im Einzelnen ist also das Mikrofon 130 an den EK1 und der Hörer 140 an den AK1 des PMLT 100 angeschaltet. Die Videokamera 110 des Komfort-Headsets 160 ist an den EK3 des PMLT 100 angeschaltet, die Viedobrille 120 entsprechend an den AK3.

Bei dem in Abb. 1 gezeigten Beispiel, aber auch bei den in den folgenden Abbildungen gezeigten Beispielen, ist das durch den PMLT 100 aktivierbare Übersetzungssystem 20 über den Telekommunikationskanal 50, bei dem es sich um einen vollduplex- und echtzeitfähigen UMTS-Telekommunikationskanal handelt, mit dem PMLT 100 verbunden.

Der Sende- und der Empfangskanal des Telekommunikationskanals 50 sind mittels der Koppeleinheit des PMLT 100 selektiv mit den Eingangs- und Ausgangsanschaltkanälen EK1, EK2, EK3 sowie AK1, AK2, AK3 des PMLT 100 koppelbar. Die in den Abbildungen nicht dargestellte Koppeleinheit ist dabei zum Beispiel als Koppelfeld oder Prozessor ausgeführt, das/der mittels einer ebenfalls nicht dargestellten Schalteinheit Hardware - und/oder Software-gestützt derart geschaltet werden kann, dass je nach gewünschter Kommunikations- und Übersetzungsart die entsprechenden Kanäle miteinander gekoppelt werden.

Für jede der-unterschiedlichen Kommunikations- und Übersetzungsarten, für die der PMLT 100 einsetzbar ist, ist zweckmäßig ein entsprechendes Profil hinterlegbar, das mittels der Schalteinheit, also beispielsweise über ein Auswahlmenü und bestimmte Tasten oder Sprachbefehle, einfach auswählbar ist.

Das Übersetzungssystem 20 selbst umfasst einen weiteren PMLT 200 mittels dem ein menschlicher Simultan-Dolmetscher, hier ein Simultan-Gebärdensprachdolmetscher, die erfoderliche Übersetzung, das heißt in diesem Fall zwischen einer Gebärden- und einer Lautsprache, bereitstellt. Wie beispielhaft dargestellt, kann der PMLT 200 ein mobiles Gerät entsprechend dem PMLT 100 sein. Alternativ kann der PMLT 200 aber auch als ein stationäres Gerät ausgeführt sein.

Der Simultan-Gebärdensprachdolmetscher benutzt in dem dargestellten Beispiel eine Videokamera als externe Bildeingabeeinheit 210 sowie ein Minidisplay als externe Bildausgabeeinheit 220. Hinsichtlich der Spracheingabe und Sprachausgabe greift er auf die im PMLT 200 integrierten, und daher nicht dargestellten, internen Einheiten, dass heißt ein Mikrofon und einen Lautsprecher, zurück. Alternertiv kann die externe Bildausgabeeinheit 220 anstelle des Minidisplays auch ein Bildschirm sein. Als weitere Möglichkeit kann der PMLT 200 auch über eine integrierte Bildausgabeeinheit 220 und/oder eine integrierte Bildeingabeeinheit 210 verfügen.

Alle genannten Eingabe- und Ausgabeeinheiten, ob interne oder externe, sind an die entsprechenden Eingangs- und Ausgangsanschaltkanäle des PMLT 200 angeschaltet.

Der Signalweg bei der in Abb. 1 dargestellten Kommunikation ist folgender:
1) Die Gebärden der gehörlosen Person werden von der Videokamera 110 des Komfort-Headsets 160 der hörenden Person, die der gehörlosen Person gegenübersteht bzw. - sitzt, aufgenommen (Video Input) und auf dem Minidisplay 220 des Simultan-Gebärdensprachdolmetschers angezeigt (Video Output).
2) Der Dolmetscher übersetzt dann die Gebärden der gehörlosen Person in eine von der hörenden Person beherrschte Lautsprache. Die von dem Mikrofon des PMLT 200 aufgenommene Lautsprache des Dolmetschers (Audio Input) wird auf dem Hörer 140 des Komfort-Headsets 160 der hörenden Person wiedergegeben (Audio Output).
3) Die hörende Person kann nun wie gewohnt in einer Lautsprache antworten, obwohl die Antwort an eine gehörlose Person gerichtet ist. Die vom dem Mikrofon 130 des Komfort-Headsets 160 der hörenden Person aufgenommene Lautsprache (Audio Input) wird auf dem Lautsprecher des PMLT 200 des Dolmetschers wiedergegeben (Audio Output).
4) Der Dolmetscher übersetzt dann wieder die Lautsprache der hörenden Person in eine von der gehörlosen Person beherrschte Gebärdensprache. Die Gebärden des Dolmetschers werden von der Videokamera 210 aufgenommen (Video Input) und auf der Videobrille 120 der gehörlosen Person angezeigt (Video Output).

Wenn die gehörlose Person nun antwortet, beginnt dieser Ablauf wieder bei Schritt 1).

Abb. 2 zeigt beispielhaft den Signalweg der Kommunikation zwischen zwei hörenden Personen, die aber keine gemeinsame Sprache beherrschen, bei einer Übersetzung mittels des erfindungsgemäßen PMLT 100.

Bei dieser Kommunikation trägt die erste Person ein Headset 150 und die zweite Person ein Headset 151, bei welchen es sich jeweils um eine Kombination aus einem Kopfhörer als externe Sprachausgabeeinheit 140, 141 und einem tragbaren Mikrofon als externe Spracheingabeeinheit 130, 131 handelt.

Das Mikrofon 130 ist dabei an den EK1 und der Hörer 140 an den AK1 des PMLT 100 angeschaltet. Ferner ist das Mikrofon 131 an den EK2 und der Hörer 141 an den AK2 des PMLT 100 angeschaltet.

Der menschliche Simultan-Dolmetscher nimmt in diesem Fall die Übersetzung zwischen zwei unterschiedlichen Lautsprachen vor. Eine Bildeingabe- sowie Bildausgabeeinheit sind bei dieser Übersetzung nicht erforderlich. Bei der Spracheingabe und Sprachausgabe greift der Dolmetscher auf die im PMLT 200 integrierten, und daher nicht dargestellten, internen Einheiten, dass heißt ein Mikrofon und einen Lautsprecher, zurück.

Der Signalweg bei der in Abb. 2 dargestellten Kommunikation ist folgender:
1) Die Lautsprache einer ersten hörenden Person wird von dem Mikrofon 130 des Headsets 150 dieser Person aufgenommen (Audio Input) und auf Lautsprecher des PMLT 200 des Simultan-Dolmetschers wiedergegeben (Audio Output).
2) Der Dolmetscher übersetzt dann die Lautsprache der ersten Person in die von der zweiten hörenden Person beherrschte Lautsprache. Die von dem Mikrofon des PMLT 200 aufgenommene Lautsprache des Dolmetschers (Audio Input) wird auf dem Hörer 141 des Headsets 151 der zweiten Person wiedergegeben (Audio Output).
3) Die zweite Person kann nun wie gewohnt in der von ihr beherrschten Lautsprache antworten. Die vom dem Mikrofon 131 des Headsets 151 aufgenommene Lautsprache (Audio Input) wird auf dem Lautsprecher des PMLT 200 des Dolmetschers wiedergegeben (Audio Output).
4) Der Dolmetscher übersetzt dann wieder die Lautsprache der zweiten Person in die von der ersten Person beherrschte Lautsprache. Die Lautsprache des Dolmetschers wird von dem Mikrofon des PMLT 200 aufgenommen (Audio Input) und auf dem Hörer 140 des Headsets 150 der ersten Person wiedergegeben (Audio Output).

Wenn die erste Person nun antwortet, beginnt dieser Ablauf wieder bei Schritt 1).

Abb. 3 zeigt beispielhaft den Signalweg der Kommunikation, bei welcher eine blinde aber hörende Person mittels des erfindungsgemäßen PMLT 100 Informationen über ihre visuell wahrnehmbare Umwelt in einer akustisch wahrnehmbaren Sprache erhält.

Bei dem hier dargestellten Beispiel trägt eine blinde aber hörende Person ein Komfort-Headset 160, das einen Köpfhörer 140, ein tragbares Mikrofon 130 und eine tragbare Videokamera 110 umfasst.

Das Mikrofon 130 ist dabei an den EK1 und der Hörer 140 an den AK1 des PMLT 100 angeschaltet. Die Kamera 110 ist ferner an den EK3 des PMLT 100 angeschaltet. -

Auf Seiten des über den Telekommunikationskanal 50 mit dem PMLT 100 verbundenen Übersetzungssystems 20, muss nun eine Übersetzung von visuell wahrnehmbaren Informationen aus der Umwelt der blinden Person in eine akustisch wahrnehmbare Sprache erfolgen. Im Englischen wird dies auch als audio description bezeichnet. Diese Übersetzung stellt mittels des PMLT 200 ein menschlicher Bildbeschreiber und Vorleser bereit.

Der menschliche Bildbeschreiber und Vorleser benutz hierbei ein Minidisplay als externe Bildausgabeeinheit 220, eine Bildeingabeeinheit ist hingegen nicht erforderlich. Bei der Spracheingabe und Sprachausgabe greift der Bildbeschreiber und Vorleser wiederum auf die im PMLT 200 integrierten, und daher nicht dargestellten, internen Einheiten, dass heißt ein Mikrofon und einen Lautsprecher, zurück.

Der Signalweg bei der in Abb. 3 dargestellten Kommunikation ist folgender:
1) In einer Lautsprache äußert die blinde Person einen Wunsch, was ihr vorgelesen oder beschrieben werden soll. Dies wird von dem Mikrofon 130 des Komfort-Headsets 160 der blinden Person aufgenommen (Audio Input) und auf dem Lautsprecher des PMLT 200 des Bildbeschreibers und Vorlesers wiedergegeben (Audio Output).
2) Der Bildbeschreiber und Vorleser antwortet in der gleichen Lautsprache, wobei er der blinden Person gegebenenfalls Anweisungen gibt, wie diese ihre Kamera 110 einstellen und/oder ausrichten soll. Diese Antwort wird von dem Mikrofon des PMLT 200 aufgenommen (Audio Input) und auf dem Hörer 140 des Komfort-Headsets 150 der blinden Person wiedergegeben (Audio Output).
3) Das gewünschte Bild und/oder der wünschte Text werden von der Viedokamera 110 aufgenommen (Video Input) und auf dem Minidisplay 220 des Bildbeschreibers und Vorlesers angezeigt (Video Output).
4) Der Bildbeschreiber und Vorleser kann daraufhin das angezeigte Bild beschreiben bzw. den angezeigten Text vorlesen. Die Lautsprache des Bildbeschreibers und Vorlesers wird von dem Mikrofon des PMLT 200 aufgenommen (Audio Input) und auf dem Hörer 140 des Komfort-Headsets 160 der blinden Person wiedergegeben (Audio Output).

Wenn die blinde Person nun weitere Wünsche hat, beginnt dieser Ablauf wieder bei Schritt 1).

Abb. 4 zeigt beispielhaft den Signalweg der Kommunikation zwischen einer gehörlosen, in Gebärdensprache kommunizierenden Person und einer blinden aber hörenden, in Lautsprache kommunizierenden Person bei einer Übersetzung mittels des PMLT 100.

Da die blinde Person hören und sprechen kann, entspricht ihre Ausstattung der Ausstattung der hörenden Person in Abb. 1, das heißt sie trägt ein Komfort-Headset 160.

Die Ausstattung der gehörlosen Person entspricht ferner der der gehörlosen Person in Abb. 1, das heißt sie trägt lediglich eine Videobrille 120.

Die Ein- und Ausgabeeinheiten werden in gleicher Weise an die entsprechenden Eingangs- und Ausgangsanschaltkanäle des PMLT 100 angeschaltet, wie es bei dem in Abb.1 dargestellten Beispiel der Fall ist.

Auch das Übertragungssystem 20 und dessen Bestandteile entsprechen denen in Abb. 1.

Der Signalweg bei der in Abb. 4 dargestellte Kommunikation ist folgender:
1) Die blinde Person beginnt die Kommunikation und spricht etwas in einer von ihr beherrschten Lautsprache. Die vom dem Mikrofon 130 des Komfort-Headsets 160 der blinden Person aufgenommene Lautsprache (Audio Input) wird auf dem Lautsprecher des PMLT 200 des Simultan-Gebärdensprachdolmetschers wiedergegeben (Audio Output).
2) Der Dolmetscher übersetzt dann die Lautsprache der blinden Person in eine von der gehörlosen Person beherrschte Gebärdensprache. Die Gebärden des Dolmetschers werden von der Videokamera 210 aufgenommen (Video Input) und auf der Videobrille 120 der gehörlosen Person angezeigt (Video Output).
3) Die gehörlose Person kann nun in Gebärdensprache antworten, wobei die Gebärden der gehörlosen Person von der Videokamera 110 des Komfort-Headsets 160 der blinden Person, die der gehörlosen Person gegenübersteht bzw. - sitzt, aufgenommen (Video Input) und auf dem Minidisplay 220 des Dolmetschers angezeigt werden (Video Output).
4) Der Dolmetscher übersetzt dann die Gebärden der gehörlosen Person in die von der hörenden Person beherrschte Lautsprache. Die von dem Mikrofon 230 aufgenommene Lautsprache des Dolmetschers (Audio Input) wird auf dem Hörer 140 des Komfort-Headsets 160 der blinden Person wiedergegeben (Audio Output).

Wenn die blinde Person nun antwortet, beginnt dieser Ablauf wieder bei Schritt 1).

Abb. 5 zeigt beispielhaft den Signalweg der Kommunikation, bei welcher eine hörende Person mittels des erfindungsgemäßen PMLT 100 eine Übersetzung der fremdsprachigen akustisch und/oder visuell wahrnehmbaren Informationen aus ihrer Umwelt-in eine von ihr beherrschte, akustisch wahrnehmbare Sprache erhält.

Bei dem hier dargestellten Fall trägt eine hörende Person, die beispielsweise eine fremdsprachige Vorlesung oder Präsentation verstehen möchte, einen Kopfhörer als externe Sprachausgabeeinheit 140. Der Kopfhörer 140 ist an den EK1 des PMLT 100 angeschaltet.

Gemäß Abb. 5 verfügt der Referent über einen weiteren PMLT 300 an dessen EK1 ein Mikrofon als externe Spracheingabeeinheit 330 und eine Kamera als externe Bildeingabeeinheit 310 an dessen EK3 angeschaltet sind. Über den UMTS-Telekommunikationskanal 50 ist der PMLT 300 des Referenten mit dem PMLT 100 der hörenden Person verbunden. Demnach kann die hörende Person dank Telekommunikation die Präsentation auch von einem im Wesentlichen beliebigen Ort aus verfolgen. Alternativ hierzu ist es aber ebenso möglich, dass das Mikrofon für den Referenten an den EK2 des PMLT 100 und die Kamera und an den EK3 des PMLT 100 der hörenden Person, insbesondere mittels Funkübertragungstechniken wie Bluetooth, angeschaltet sind.

Auf Seiten des Übersetzungssystems 20, muss nun ein Simultan-Dolmetscher mittels des PMLT 200 eine Übersetzung sowohl von fremdsprachigen visuell wahrnehmbaren Informationen als auch von fremdsprachigen akustisch wahrnehmbaren Informationen in die von der hörenden Person beherrschte Lautsprache bereitstellen.

Der Dolmetscher benutz hierbei ein Minidisplay als externe Bildausgabeeinheit 220, eine Bildeingabeeinheit ist hingegen nicht erforderlich. Bei der Spracheingabe und Sprachausgabe greift der Dolmetscher wiederum auf die im PMLT 200 integrierten, und daher nicht dargestellten, internen Einheiten, dass heißt ein Mikrofon und einen Lautsprecher, zurück.

Der Signalweg bei der in Abb. 5 dargestellte Kommunikation ist folgender:
1) In einer von der hörenden Person nicht beherrschten Lautsprache hält der Referent seine Präsentation. Dies wird von dem Mikrofon 330 aufgenommen (Audio Input) und auf dem Lautsprecher des PMLT 200 des Dolmetschers wiedergegeben (Audio Output).
2) Des Weiteren nimmt die Kamera 310 ein Bild auf (Video Input), das auf dem Minidisplay 220 des Dolmetschers angezeigt wird (Video Output). Dabei kann es sich beispielsweise um den fremdsprachigen Inhalt einer Präsentationsfolie handelt.
3) Der Dolmetscher übersetzt nun das Gesprochene des Referenten sowie den Inhalt der Präsentationsfolie die von der hörenden Person beherrschte Lautsprache. Dies wird von dem Mikrofon des PMLT 200 aufgenommen (Audio Input) und auf dem Kopfhörer 140 der hörenden Person wiedergegeben (Audio Output).

Abb. 6 zeigt beispielhaft den Signalweg der Kommunikation, bei welcher eine gehörlose Person mittels des erfindungsgemäßen PMLT 100 eine Übersetzung der akustisch und/oder visuell wahrnehmbaren Informationen aus ihrer Umwelt in eine von ihr beherrschte, visuell wahrnehmbare Sprache erhält.

Der hier dargestellten Fall ist ähnlich dem zuvor in Abb. 5 dargestellten Fall, wobei nunmehr eine gehörlose Person beispielsweise eine Vorlesung oder Präsentation verfolgen und verstehen möchte. Die gehörlose Person trägt hierzu lediglich ein Minidisplay oder eine Videobrille als externe Bildausgabeeinheit 120, die an den AK3 des PMLT 100 angeschaltet ist.

Wie bei dem in Abb. 5 dargestellten Beispiel verfügt der Referent über einen weiteren PMLT 300 an dessen EK1 ein Mikrofon als externe Spracheingabeeinheit 330 und eine Kamera als externe Bildeingabeeinheit 310 an dessen EK3 angeschaltet sind. Alternativ hierzu ist es aber ebenso möglich, dass das Mikrofon für den Referenten an den EK2 des PMLT 100 und die Kamera und an den EK3 des PMLT 100 der gehörlosen Person angeschaltet sind.

Auf Seiten des Übersetzungssystems 20, muss nun ein Simultan-Gebärdensprachdolmetscher mittels des PMLT 200 eine Übersetzung der Informationen sowohl aus einer akustisch wahrnehmbaren Sprache als auch aus einer von der gehörlosen Person nicht beherrschten Schriftsprache in die von der gehörlosen Person beherrschte Gebärdensprache bereitstellen.

Der Dolmetscher benutz hierbei ein Minidisplay als externe Bildausgabeeinheit 220 sowie eine Videokamera als externe Bildeingabeeinheit 210. Für die Sprachausgabe greift der Dolmetscher auf den im PMLT 200 integrierten, und daher nicht dargestellten, internen Lautsprecher zurück. Alle genannten Eingabe- und Ausgabeeinheiten, ob interne oder externe, sind an die entsprechenden Eingangs- und Ausgangsanschaltkanäle des PMLT 200 angeschaltet.

Der Signalweg bei der in Abb. 6 dargestellten Kommunikation ist folgender:
1) Der Referent hält in einer Lautsprache seine Präsentation. Dies wird von dem Mikrofon 330 aufgenommen (Audio Input) und auf dem Lautsprecher des PMLT 200 des Dolmetschers wiedergegeben (Audio Output).
2) Des Weiteren nimmt die Kamera 310 ein Bild auf (Video Input), das auf dem Minidisplay 220 des Dolmetschers angezeigt wird (Video Output). Dabei kann es sich beispielsweise um den Inhalt einer Präsentationsfolie handeln, welcher in einer von der gehörlosen Person nicht beherrschten Schriftsprache vorliegt.
3) Der Dolmetscher übersetzt nun das Gesprochene des Referenten sowie den Inhalt der Präsentationsfolie in die von der gehörlosen Person beherrschte Gebärdensprache. Dies wird von der Kamera 210 aufgenommen (Video Input) und auf der Videobrille 120 der gehörlosen Person angezeigt (Video Output).

Abb. 7 zeigt beispielhaft den Signalweg der Kommunikation, bei welcher eine blinde aber hörende Person mittels des erfindungsgemäßen PMLT 100 eine Übersetzung der akustisch und/oder visuell wahrnehmbaren Informationen aus ihrer Umwelt in eine von ihr beherrschte, akustisch wahrnehmbare Sprache erhält.

Mit dem Unterschied, dass es sich bei der beispielsweise eine Vorlesung oder Präsentation verfolgenden Person um eine blinde aber hörende Person handelt, entspricht das in Abb. 7 dargestellte Beispiel ansonsten dem in Abb. 5 dargestellten Beispiel.

Abb. 8 zeigt beispielhaft die bevorzugte Ausstattung für eine gehörlose und eine hörende Person, die mittels des PMLT 100 miteinander kommunizieren.

Die Videobrille 120 der gehörlosen Person sowie das Komfort-Headset 160 ihres hörenden Kommunikationspartners sind im dargestellten Beispiel mittels Funkübertragungstechniken wie Bluetooth kabellos mit dem PMLT 100 verbunden.

Über einen UMTS-Telekommunikationskanal 50 ist der PMLT 100 mit dem Übersetzungssystem verbunden, wobei es sich um ein System 20a handeln kann, bei dem die Übersetzung durch einen Simultan-Gebärdensprachdolmetscher erfolgt, oder alternativ um ein System 20b, bei dem die Übersetzung automatisch durch einen entsprechend ausgebildeten Server erfolgt. Des Weiteren ist eine Ausführungsform des PMLT 100 vorgesehen, bei der das Übersetzungssystem im PMLT 100 integriert ist.

Abb. 9 zeigt beispielhaft die bevorzugte Ausstattung für zwei hörende Personen, die keine gemeinsame Sprache beherrschen und mittels der erfindungsgemäßen mobilen Telekommunikationseinrichtung miteinander kommunizieren.

Jedes der beiden Headsets 150 und 151 ist kabellos mit dem PMLT 100 verbunden, welcher ferner über einen UMTS-Telekommunikationskanal 50 mit dem Übersetzungssystem 20a, bei dem die Übersetzung durch einen Simultan-Dolmetscher erfolgt, oder 20b verbunden ist.

Abb. 10 zeigt beispielhaft die bevorzugte Ausstattung für eine blinde Person, die mittels der erfindungsgemäßen mobilen Telekommunikationseinrichtung Informationen über ihre visuell wahrnehmbare Umwelt in einer akustisch wahrnehmbaren Sprache erhält.

Das Komfort-Headset 160 der blinden Person ist dabei mittels Bluetooth oder einer anderen Funkübertragungstechnik kabellos mit dem PMLT 100 verbunden.

Abb. 11 zeigt beispielhaft einen Ausschnitt aus dem Verlauf einer Kommunikation gemäß dem als Global Mobile Communication Premium (GMCP) betitelten Konzepts, bei welcher eine blinde aber hörende Person mittels des erfindungsgemäßen PMLT 100 akustisch wahrnehmbare Informationen über ihre visuell wahrnehmbare Umwelt erhält.

## Patentansprüche

1. Mobile Telekommunikationseinrichtung (100) zum Übertragen und Übersetzen von Informationen, umfassend:
wenigstens einen Telekommunikationskanal (50), der einen Sende- und einen Empfangskanal umfasst, zum Übertragen von Informationen zu und von einer anderen Telekommunikationseinrichtung;
einen ersten Eingangsanschaltkanal (EK1) zum Anschalten einer ersten Spracheingabeeinheit (130) und
einen ersten Ausgangsanschaltkanal (AK1) zum Anschalten einer ersten Sprachausgabeeinheit (140);
einen zweiten Eingangsanschaltkanal (EK2) zum Anschalten einer zweiten Spracheingabeeinheit (131, 330) und
einen zweiten Ausgangsanschaltkanal (AK2) zum Anschalten einer zweiten Sprachausgabeeinheit (141);
wenigstens einen dritten Eingangsanschaltkanal (EK3) zum Anschalten einer Bildeingabeeinheit (110, 310) und
wenigstens einen dritten Ausgangsanschaltkanal (AK3) zum Anschalten einer Bildausgabeeinheit (120);
wenigstens eine angeschaltete Sprach- oder Bildeingabeeinheit (130, 131, 330, 110, 310) und
wenigstens eine angeschaltete Sprach- oder Bildausgabeeinheit (140, 141, 120);
eine Koppeleinheit zum selektiven Koppeln des Empfangskanals und/oder des ersten, zweiten und/oder dritten Eingangsanschaltkanals (EK1, EK2, EK3) mit dem Sendekanal und/oder dem ersten, zweiten und/oder dem dritten Ausgangsanschaltkanal (AK1, AK2, AK3) unter Zwischenschaltung eines von der mobilen Telekommunikationseinheit aktivierbaren Übersetzungssystems (20, 20a, 20b);
eine Schalteinheit, mittels der die Koppeleinheit schaltbar ist.

2. Mobile Telekommunikationseinrichtung (100) nach Anspruch 1, wobei
der Telekommunikationskanal (50) ein vollduplex - und echtzeitfähiger Telekommunikationskanal ist; und/oder wobei
eine angeschaltete Sprach- und/oder Bildeingabeeinheit (130, 131, 330, 110, 310) und eine angeschaltete Sprach- und/oder Bildausgabeeinheit (140, 141, 120) als interne Einheit in die mobile Telekommunikationseinrichtung (100) integriert oder als externe Einheit mit der mobilen Telekommunikationseinrichtung (100) kabelbasiert oder kabellos verbunden sind.

3. Mobile Telekommunikationseinrichtung (100) nach einem der Ansprüche 1 oder 2, wobei
eine angeschaltete Spracheingabeeinheit (130, 131, 330) und/oder eine angeschaltete Sprachausgabeeinheit (140, 141) als externe Einheit mit der mobilen Telekommunikationseinrichtung (100) kabelbasiert oder kabellos verbunden sind und wobei
die externe Spracheingabeeinheit ein tragbares Mikrofon (130, 131, 330) und/oder die externe Sprachausgabeeinheit ein Kopfhörer (140, 141) ist; und/oder wobei
die externe Spracheingabeeinheit (130, 131) und die externe Sprachausgabeeinheit (140, 141) mechanisch miteinander verbunden sind und eine gemeinsame Einheit (150, 151) bilden.

4. Mobile Telekommunikationseinrichtung (100) nach einem der Ansprüche 1 bis 3, wobei
eine angeschaltete Bildeingabeeinheit (110, 310) und/oder eine angeschaltete Bildausgabeeinheit (120) als externe Einheit mit der mobilen Telekommunikationseinrichtung (100) kabelbasiert oder kabellos verbunden sind und wobei
die externe Bildeingabeeinheit (110, 310) eine tragbare Videokamera ist und/oder die externe Bildausgabeeinheit eine tragbare Anzeigeeinheit (120) ist, die wie eine Brille vor einem oder beiden Augen eines Benutzers angebracht ist.

5. Mobile Telekommunikationseinrichtung nach einem der Ansprüche 1 bis 4, wobei
eine angeschaltete Bildeingabeeinheit (110) und eine angeschaltete Spracheingabeeinheit (130) und/oder Sprachausgabeeinheit (140) als externe Einheit mit der mobilen Telekommunikationseinrichtung (100) kabelbasiert oder kabellos verbunden sind und wobei
die externe Bildeingabeeinheit (110) und die externe Spracheingeabeeinheit (130) und/oder die externe Sprachausgabeeinheit (140) mechanisch miteinander verbunden sind und eine gemeinsame Einheit (160) bilden.

6. Mobile Telekommunikationseinrichtung (100) nach einem der Ansprüche 1 bis 5, wobei
mittels der Koppeleinheit, unter Zwischenschalten des Übersetzungssystems (20, 20a, 20b), der erste Eingangsanschaltkanal (EK1), an den eine Spracheingabeeinheit (130) angeschaltet ist, mit dem dritten Ausgangsanschaltkanal (AK3), an den eine Bildausgabeeinheit (120) angeschaltet ist, und der dritte Eingangsanschaltkanal (EK3), an den eine Bildeingabeeinheit (110) angeschaltet ist, mit dem ersten Ausgangsanschaltkanal (AK1), an den eine Sprachausgabeeinheit (140) angeschaltet ist, derart gekoppelt sind, dass eine Kommunikation zwischen zwei Benutzern, von denen der eine in einer visuell wahrnehmbaren Sprache kommuniziert und der in einer akustisch wahrnehmbaren Sprache kommuniziert, möglich ist.

7. Mobile Telekommunikationseinrichtung (100) nach Anspruch 6, wobei
die Bildeingabeeinheit (110) eine externe, tragbare Videokamera ist, die von dem in einer akustisch wahrnehmbaren Sprache kommunizierenden Benutzer getragen wird und wobei die Bildeingabeeinheit (110) auf dessen Kommunikationspartner, den in einer visuell wahrnehmbaren Sprache kommunizierenden Benutzer, gerichtet ist; und/oder wobei
anstelle des ersten Eingangsanschaltkanals (EK1), der Empfangskanal mit dem dritten Ausgangskanal (AK3), und der dritte Eingangsanschaltkanal (EK3) mit dem Sendekanal anstelle des ersten Ausganganschaltkanals (AK1) derart gekoppelt sind, dass unter Verwendung einer zweiten Telekommunikationseinrichtung (300) eine Telekommunikation zwischen zwei voneinander entfernten Benutzern, von denen der eine in einer visuell wahrnehmbaren Sprache kommuniziert und der andere in einer akustisch wahrnehmbaren Sprache kommuniziert, möglich ist.

8. Mobile Telekommunikationseinrichtung (100) nach einem der Ansprüche 1 bis 5, wobei
mittels der Koppeleinheit, unter Zwischenschalten des Übersetzungssystems (20, 20a, 20b), der erste Eingangsanschaltkanal (EK1), an den eine Spracheingabeeinheit (130) angeschaltet ist, mit dem zweiten Ausgangsanschaltkanal (AK2), an den eine Sprachausgabeeinheit (141) angeschaltet ist, und der zweite Eingangsanschaltkanal (EK2), an den eine Spracheingabeeinrichtung (131) angeschaltet ist, mit dem ersten Ausgangsanschaltkanal (AK1), an den eine Sprachausgabeeinheit (140) angeschaltet ist, derart gekoppelt sind, dass eine Kommunikation zwischen zwei Benutzern, von denen der eine in einer akustisch wahrnehmbaren Sprache kommuniziert und der andere in einer anderen akustisch wahrnehmbaren Sprache kommuniziert, möglich ist.

9. Mobile Telekommunikationseinrichtung (100) nach Anspruch 8, wobei
der erste Eingangsanschaltkanal (EK1) mit dem Sendekanal anstelle des zweiten Ausgangsanschaltkanal (AK2), und anstelle des zweiten Eingangsanschaltkanal (EK2) der Empfangskanal mit dem ersten Ausgangsanschaltkanal (AK1) derart gekoppelt sind, dass unter Verwendung einer zweiten Telekommunikationseinrichtung (300) eine Telekommunikation zwischen zwei voneinander entfernten Benutzern, von denen der eine in einer akustisch wahrnehmbaren Sprache kommuniziert und der andere in einer anderen akustisch wahrnehmbaren Sprache kommuniziert, möglich ist.

10. Mobile Telekommunikationseinrichtung (100) nach einem der Ansprüche 1 bis 5, wobei
mittels der Koppeleinheit, unter Zwischenschalten des Übersetzungssystems (20, 20a, 20b), der erste Eingangsanschaltkanal (EK1), an den eine Spracheingabeeinrichtung (130) angeschaltet ist, mit dem dritten Ausgangsanschaltkanal (AK3), an den eine Bildausgabeeinheit (120) angeschaltet ist, derart gekoppelt sind, dass ein Benutzer, der Informationen nur visuell wahrnehmen kann, Informationen über seine akustisch wahrnehmbare Umwelt in einer visuell wahrnehmbaren Sprache erhält; oder wobei
mittels der Koppeleinheit, unter Zwischenschalten des Übersetzungssystems (20, 20a, 20b), der dritte Eingangsanschaltkanal (EK3), an den eine Bildeingabeeinrichtung (110) angeschaltet ist, mit dem ersten Ausgangsanschaltkanal (AK1), an den eine Sprachausgabeeinheit (140) angeschaltet ist, derart gekoppelt sind, dass ein Benutzer, der Informationen nur akustisch wahrnehmen kann, Informationen über seine visuell wahrnehmbare Umwelt in einer akustisch wahrnehmbaren Sprache erhält.

11. Mobile Telekommunikationseinrichtung (100) nach einem der Ansprüche 1 oder 10, wobei
die Koppeleinheit dazu ausgebildet ist, unter Zwischenschalten des Übersetzungssystems (20, 20a, 20b) und ferner unter Auswerten von Steuerinformationen, die zusammen mit den während einer Kommunikation zu übertragenden Informationen übertragen werden, selektiv den Empfangskanals und/oder den ersten, zweiten und/oder dritten Eingangsanschaltkanals (EK1, EK2, EK3) mit dem Sendekanal und/oder dem ersten, zweiten und/oder dem dritten Ausgangsanschaltkanal (AK1, AK2, AK3) zu koppeln; und/oder wobei
das Übersetzungssystem (20, 20a, 20b) dazu ausgebildet ist, eine Information aus einer akustisch wahrnehmbaren Sprache simultan zu übersetzen in eine visuell wahrnehmbare Sprache und/oder in eine andere akustisch wahrnehmbare Sprache; und wobei
das Übersetzungssystem (20, 20a, 20b) dazu ausgebildet ist, eine Information aus einer visuell wahrnehmbaren Sprache simultan zu übersetzen in eine akustisch wahrnehmbare Sprache und/oder eine andere visuell wahrnehmbare Sprache; und/oder wobei
das Übersetzungssystem (20, 20a, 20b) dazu ausgebildet ist, eine akustisch wahrnehmbare Information, simultan zu übersetzen in eine visuell wahrnehmbare Information; und wobei
das Übersetzungssystem (20, 20a, 20b) dazu ausgebildet ist, eine visuell wahrnehmbare Information, simultan zu übersetzen in eine akustisch wahrnehmbare Information.

12. Mobile Telekommunikationseinrichtung (100) nach einem der Ansprüche 1 bis 11, wobei
das Übersetzungssystem (20, 20a, 20b) über den Telekommunikationskanal mit der mobilen Telekommunikationseinrichtung verbindbar ist.

13. Mobile Telekommunikationseinrichtung nach Anspruch 12, wobei
das Übersetzungssystem (20, 20a) eine zweite Telekommunikationseinrichtung (200) zumindest nach Anspruch 1 umfasst, die als mobile oder stationäre Telekommunikationseinrichtung ausgebildet ist, mittels der ein menschlicher Simultan-Dolmetscher eine Übersetzung nach Anspruch 16 und/oder 17 bereitstellt.

14. Mobile Telekommunikationseinrichtung (100) nach einem der Ansprüche 1 oder 10, wobei
das Übersetzungssystem (20) in die mobile Telekommunikationseinrichtung (100) integriert ist.

## Claims

1. Mobile telecommunication device (100) for transmitting and translating information, comprising:
at least one telecommunication channel (50) which includes a transmission and a reception channel for transmitting information to and from another telecommunication device;
a first input connection channel (EK1) for connection of a first speech input unit (130) and
a first output connection channel (AK1) for connection of a first speech output unit (140);
a second input connection channel (EK2) for connection of a second speech input unit (131,330) and
a second output connection channel (AK2) for connection of a second speech output unit (141);
at least one third input connection channel (EK3) for connection of an image input unit (110, 310) and
at least one third output connection channel (AK3) for connection of an image output unit (120);
at least one connected speech or image input unit (130, 131, 330, 110, 310) and
at least one connected speech or image output unit (140, 141, 120);
a coupling unit for selectively coupling the reception channel and/or the first, second and/or third input connection channel (EK1, EK2, EK3) to the transmission channel and/or to the first, second and/or the third output connection channel (AK1, AK2, AK3) with interconnection of a translation system (20, 20a, 20b) which can be activated by the mobile telecommunication unit;
a switching unit by means of which the coupling unit can be switched.

2. Mobile telecommunication device (100) as claimed in claim 1, wherein
the telecommunication channel (50) is a full duplex telecommunication channel and a telecommunication channel with real time capability; and/or wherein
a connected speech and/or image input unit (130, 131, 330, 110, 310) and a connected speech and/or image output unit (140, 141, 120) are integrated as an internal unit into the mobile telecommunication device (100) or are connected as an external unit to the mobile telecommunication device (100) in a cable-based or cable-free manner.

3. Mobile telecommunication device (100) as claimed in any one of claims 1 or 2, wherein
a connected speech input unit (130, 131, 330) and/or a connected speech output unit (140, 141) are connected as an external unit to the mobile telecommunication device (100) in a cable-based or cable-free manner and wherein
the external speech input unit is a portable microphone (130, 131, 330) and/or the external speech output unit is a headset (140, 141); and/or wherein
the external speech input unit (130, 131) and the external speech output unit (140, 141) are mechanically connected to each other and form a common unit (150, 151).

4. Mobile telecommunication device (100) as claimed in any one of claims 1 to 3, wherein
a connected image input unit (110, 310) and/or a connected image output unit (120) are connected as an external unit to the mobile telecommunication device (100) in a cable-based or cable-free manner and wherein
the external image input unit (110, 310) is a portable video camera and/or the external image output unit is a portable display unit (120) which is mounted like spectacles in front of one or both eyes of a user.

5. Mobile telecommunication device as claimed in any one of claims 1 to 4, wherein
a connected image input unit (110) and a connected speech input unit (130) and/or speech output unit (140) are connected as an external unit to the mobile telecommunication device (100) in a cable-based or cable-free manner and wherein
the external image input unit (110) and the external speech input unit (130) and/or the external speech output unit (140) are mechanically connected to each other and form a common unit (160).

6. Mobile telecommunication device (100) as claimed in any one of claims 1 to 5, wherein
by means of the coupling unit, with interconnection of the translation system (20, 20a, 20b), the first input connection channel (EK1), to which a speech input unit (130) is connected, is coupled to the third output connection channel (AK3), to which an image output unit (120) is connected, and the third input connection channel (EK3), to which an image input device (110) is connected, is coupled to the first output connection channel (AK1), to which a speech output unit (140) is connected, in such a way that communication is possible between two users, one of which communicates in a visually perceivable language and the [other] communicates in an acoustically perceivable language.

7. Mobile telecommunication device (100) as claimed in claim 6, wherein
the image input unit (110) is an external portable video camera which is carried by the user communicating in an acoustically perceivable language and wherein the image input unit (110) is directed at his communication partner, the user communicating in a visually perceivable language; and/or wherein
instead of the first input connection channel (EK1), the reception channel is coupled to the third output channel (AK3), and the third input connection channel (EK3) is coupled to the transmission channel instead of the first output connection channel (AK1) in such a way that, using a second telecommunication device (300), telecommunication is possible between two mutually distant users, one of which communicates in a visually perceivable language and the other communicates in an acoustically perceivable language.

8. Mobile telecommunication device (100) as claimed in any one of claims 1 to 5, wherein
by means of the coupling unit, with interconnection of the translation system (20, 20a, 20b), the first input connection channel (EK1), to which a speech input unit (130) is connected, is coupled to the second output connection channel (AK2), to which a speech output unit (141) is connected, and the second input connection channel (EK2), to which a speech input device (131) is connected, is coupled to the first output connection channel (AK1), to which a speech output unit (140) is connected, in such a way that communication is possible between two users, one of which communicates in an acoustically perceivable language and the other communicates in another acoustically perceivable language.

9. Mobile telecommunication device (100) as claimed in claim 8, wherein
the first input connection channel (EK1) is coupled to the transmission channel instead of the second output connection channel (AK2), and instead of the second input connection channel (EK2) the reception channel is coupled to the first output connection channel (AK1) in such a way that, using a second telecommunication device (300), telecommunication is possible between two mutually distant users, one of which communicates in an acoustically perceivable language and the other communicates in another acoustically perceivable language.

10. Mobile telecommunication device (100) as claimed in any one of claims 1 to 5, wherein
by means of the coupling unit, with interconnection of the translation system (20, 20a, 20b), the first input connection channel (EK1), to which a speech input device (130) is connected, are *[sic]* coupled to the third output connection channel (AK3), to which an image output unit (120) is connected, in such a way that a user who can perceive information only visually receives information about his acoustically perceivable surroundings in a visually perceivable language; or wherein
by means of the coupling unit, with interconnection of the translation system (20, 20a, 20b), the third input connection channel (EK3), to which an image input device (110) is connected, are [*sic*] coupled to the first output connection channel (AK1), to which a speech output unit (140) is connected, in such a way that a user who can perceive information only acoustically receives information about his visually perceivable surroundings in an acoustically perceivable language.

11. Mobile telecommunication device (100) as claimed in any one of claims I or 10, wherein
the coupling unit is designed in such a way as to selectively couple the reception channel and/or the first, second and/or third input connection channel (EK1, EK2, EK3) to the transmission channel and/or to the first, second and/or the third output connection channel (AK2, AK2, AK3) with interconnection of the translation system (20, 20a, 20b) and furthermore with evaluation of control information which is transmitted together with the information to be transmitted during communication; and/or wherein
the translation system (20, 20a, 20b) is designed for simultaneous translation of information from an acoustically perceivable language into a visually perceivable language and/or into another acoustically perceivable language; and wherein
the translation system (20, 20a, 20b) is designed for simultaneous translation of information from a visually perceivable language into an acoustically perceivable language and/or into another visually perceivable language; and/or wherein
the translation system (20, 20a, 20b) is designed for simultaneous translation of acoustically perceivable information into visually perceivable information; and wherein
the translation system (20, 20a, 20b) is designed for simultaneous translation of visually perceivable information into acoustically perceivable information.

12. Mobile telecommunication device (100) as claimed in any one of claims 1 to 11, wherein
the translation system (20, 20a, 20b) can be connected to the mobile telecommunication device via the telecommunication channel.

13. Mobile telecommunication device as claimed in claim 12, wherein
the translation system (20, 20a) includes a second telecommunication device (200) at least as claimed in claim 1, which is designed as a mobile or stationary telecommunication device, by means of which a human simultaneous interpreter provides a translation as claimed in claim 16 and/or 17.

14. Mobile telecommunication device (100) as claimed in any one of claims 1 or 10, wherein
the translation system (20) is integrated into the mobile telecommunication device (100).

## Revendications

1. Dispositif de télécommunication mobile (100) pour la transmission et la traduction d'informations, comprenant :
au moins un canal de télécommunication (50) composé d'un canal d'émission et d'un canal de réception, pour la transmission d'informations vers un autre dispositif de télécommunication et en provenance de celui-ci ;
un premier canal de connexion d'entrée (EK1) pour la connexion d'une première unité d'entrée vocale (130) et
un premier canal de connexion de sortie (AK1) pour la connexion d'une première unité de sortie vocale (140) ;
un deuxième canal de connexion d'entrée (EK2) pour la connexion d'une deuxième unité d'entrée vocale (131, 330) et
un deuxième canal de connexion de sortie (AK2) pour la connexion d'une deuxième unité de sortie vocale (141) ;
au moins un troisième canal de connexion d'entrée (EK3) pour la connexion d'une unité d'entrée d'image (110, 310) et
au moins un troisième canal de connexion de sortie (AK3) pour la connexion d'une unité de sortie d'image (120) ;
au moins une unité d'entrée vocale ou d'image (130, 131, 330, 110, 310) connectée et
au moins une unité de sortie vocale ou d'image (140, 141, 120) connectée ;
une unité de couplage pour le couplage sélectif du canal de réception et/ou du premier, du deuxième et/ou du troisième canal de connexion d'entrée (EK1, EK2, EK3) au canal d'émission et/ou au premier, au deuxième et/ou au troisième canal de connexion de sortie (AK1, AK2, AK3), un système de traduction (20, 20a, 20b) activable par l'unité de télécommunication mobile étant intercalé :
une unité de commutation, permettant de commuter l'unité de couplage.

2. Dispositif de télécommunication mobile (100) selon la revendication 1,
dans lequel le canal de télécommunication (50) est un canal de télécommunication apte à une liaison bidirectionnelle simultanée en temps réel ; et/ou
dans lequel une unité d'entrée vocale et/ou d'image (130, 131, 330, 110, 310) connectée et/ou une unité de sortie vocale et/ou d'image (140, 141, 120) connectée sont intégrées au dispositif de télécommunication mobile (100) en tant qu'unités internes ou sont reliées par câble ou sans câble au dispositif de télécommunication mobile (100) en tant qu'unités externes.

3. Dispositif de télécommunication mobile (100) selon la revendication 1 ou la revendication 2,
dans lequel une unité d'entrée vocale (130, 131, 330) connectée et/ou une unité de sortie vocale (140, 141) connectée sont reliées par câble ou sans câble au dispositif de télécommunication mobile (100) en tant qu'unités externes, et
dans lequel l'unité d'entrée vocale externe est un microphone (130, 131, 330) portable et/ou l'unité de sortie vocale externe est un écouteur (140, 141) ; et/ou
dans lequel l'unité d'entrée vocale externe (130, 131) et l'unité de sortie vocale externe (140, 141) sont reliées mécaniquement l'une à l'autre et forment une unité (150, 151) commune.

4. Dispositif de télécommunication mobile (100) selon l'une des revendications 1 à 3,
dans lequel une unité d'entrée d'image (110, 310) connectée et/ou une unité de sortie d'image (120) connectée sont reliées par câble ou sans câble au dispositif de télécommunication mobile (100) en tant qu'unités externes, et
dans lequel l'unité d'entrée d'image externe (110, 310) est une caméra vidéo portable et/ou l'unité de sortie d'image externe est une unité d'affichage (120) portable, laquelle est appliquée devant un oeil ou devant les deux yeux d'un utilisateur à l'instar d'un verre de lunettes.

5. Dispositif de télécommunication mobile selon l'une des revendications 1 à 4,
dans lequel une unité d'entrée d'image (110) connectée et une unité d'entrée vocale (130) connectée et/ou une unité de sortie vocale (140) connectée sont reliées par câble ou sans câble au dispositif de télécommunication mobile (100) en tant qu'unités externes, et
dans lequel l'unité d'entrée d'image externe (110) et l'unité d'entrée vocale externe (130) et/ou l'unité de sortie vocale externe (140) sont reliées mécaniquement l'une à l'autre et forment une unité (160) commune.

6. Dispositif de télécommunication mobile (100) selon l'une des revendications 1 à 5,
dans lequel, au moyen de l'unité de couplage, le système de traduction (20, 20a, 20b) étant intercalé, le premier canal de connexion d'entrée (EK1) auquel une unité d'entrée vocale (130) est connectée, est couplé au troisième canal de connexion de sortie (AK3) auquel une unité de sortie d'image (120) est connectée, et le troisième canal de connexion d'entrée (EK3) auquel une unité d'entrée d'image (110) est connectée, est couplé au premier canal de connexion de sortie (AK1) auquel une unité de sortie vocale (140) est connectée, de manière à permettre une communication entre deux utilisateurs, dont le premier communique dans une langue visuellement perceptible et l'autre dans une langue acoustiquement perceptible.

7. Dispositif de télécommunication mobile (100) selon la revendication 6,
dans lequel l'unité d'entrée d'image (110) est une caméra vidéo externe, portée par l'utilisateur communiquant dans une langue acoustiquement perceptible et dans lequel l'unité d'entrée d'image (110) est dirigée vers l'interlocuteur de celui-ci, l'utilisateur communiquant dans une langue visuellement perceptible ; et/ou
dans lequel, au lieu du premier canal de connexion d'entrée (EK1), le canal de réception est couplé au troisième canal de sortie (AK3), et le troisième canal de connexion d'entrée (EK3) au canal d'émission au lieu du premier canal de connexion de sortie (AK1), de manière à permettre une télécommunication entre deux utilisateurs distants l'un de l'autre, dont le premier communique dans une langue visuellement perceptible et l'autre dans une langue acoustiquement perceptible, en utilisant un deuxième dispositif de télécommunication (300).

8. Dispositif de télécommunication mobile (100) selon l'une des revendications 1 à 5,
dans lequel, au moyen de l'unité de couplage, le système de traduction (20, 20a, 20b) étant intercalé, le premier canal de connexion d'entrée (EK1) auquel une unité d'entrée vocale (130) est connectée, est couplé au deuxième canal de connexion de sortie (AK2) auquel une unité d'entrée vocale (141) est connectée, et dans lequel le deuxième canal de connexion d'entrée (EK2) auquel un dispositif d'entrée vocale (131) est connecté, est couplé au premier canal de connexion de sortie (AK1) auquel une unité de sortie vocale (140) est connectée, de manière à permettre une communication entre deux utilisateurs, dont le premier communique dans une langue acoustiquement perceptible et l'autre dans une autre langue acoustiquement perceptible.

9. Dispositif de télécommunication mobile (100) selon la revendication 8,
dans lequel le premier canal de connexion d'entrée (EK1) est couplé au canal d'émission au lieu du deuxième canal de connexion de sortie (AK2), et au lieu du deuxième canal de connexion d'entrée (EK2), le canal de réception est couplé au premier canal de connexion de sortie (AK1) de manière à permettre une télécommunication entre deux utilisateurs distants l'un de l'autre, dont le premier communique dans une langue acoustiquement perceptible et l'autre dans une autre langue acoustiquement perceptible, en utilisant un deuxième dispositif de télécommunication (300).

10. Dispositif de télécommunication mobile (100) selon l'une des revendications 1 à 5,
dans lequel, au moyen de l'unité de couplage, le système de traduction (20, 20a, 20b) étant intercalé, le premier canal de connexion d'entrée (EK1) auquel un dispositif d'entrée vocale (130) est connecté, est couplé au troisième canal de connexion de sortie (AK3) auquel une unité de sortie d'image (120) est connectée, de telle manière qu'un utilisateur ne pouvant percevoir des informations que visuellement, reçoit des informations sur son environnement acoustiquement perceptible dans une langue visuellement perceptible ; ou
dans lequel, au moyen de l'unité de couplage, le système de traduction (20, 20a, 20b) étant intercalé, le troisième canal de connexion d'entrée (EK3) auquel un dispositif d'entrée d'image (110) est connecté, est couplé au premier canal de connexion de sortie (AK1) auquel une unité de sortie vocale (140) est connectée, de telle manière qu'un utilisateur ne pouvant percevoir des informations qu'acoustiquement, reçoit des informations sur son environnement visuellement perceptible dans une langue acoustiquement perceptible.

11. Dispositif de télécommunication mobile (100) selon l'une des revendications 1 et 10,
dans lequel l'unité de couplage est prévue pour coupler sélectivement le canal de réception et/ou le premier, le deuxième et/ou le troisième canal de connexion d'entrée (EK1, EK2, EK3) au canal d'émission et/ou au premier, au deuxième et/ou au troisième canal de connexion de sortie (AK1, AK2, AK3), le système de traduction (20, 20a, 20b) étant intercalé et des informations de commande étant en outre évaluées, lesquelles sont transmises avec les informations à transmettre pendant une communication ; et/ou
dans lequel le système de traduction (20, 20a, 20b) est prévu pour la traduction simultanée d'une information d'une langue acoustiquement perceptible vers une langue visuellement perceptible, et/ou vers une autre langue acoustiquement perceptible ; et
dans lequel le système de traduction (20, 20a, 20b) est prévu pour la traduction simultanée d'une information d'une langue visuellement perceptible vers une langue acoustiquement perceptible, et/ou vers une autre langue visuellement perceptible ; et/ou
dans lequel le système de traduction (20, 20a, 20b) est prévu pour la traduction simultanée d'une information acoustiquement perceptible en une information visuellement perceptible ; et
dans lequel le système de traduction (20, 20a, 20b) est prévu pour la traduction simultanée d'une information visuellement perceptible en une information acoustiquement perceptible.

12. Dispositif de télécommunication mobile (100) selon l'une des revendications 1 à 11,
dans lequel le système de traduction (20, 20a, 20b) peut être relié au dispositif de télécommunication mobile par le canal de télécommunication.

13. Dispositif de télécommunication mobile selon la revendication 12,
dans lequel le système de traduction (20, 20a) comprend un deuxième dispositif de télécommunication (200) au moins selon la revendication 1, lequel est réalisé comme dispositif de télécommunication mobile ou fixe, au moyen duquel un interprète simultané humain procède à une traduction selon la revendication 16 et/ou 17.

14. Dispositif de télécommunication mobile (100) selon l'une des revendications 1 et 10,
dans lequel le système de traduction (20) est intégré au dispositif de télécommunication mobile (100).
